# FASCICULE DE BREVET EUROPEEN

(11) **EP 1 137 208 B1**
(45) Date de publication et mention de la délivrance du brevet: **25.11.2009**
(21) Numéro de dépôt: 01400466.7
(22) Date de dépôt: 22.02.2001
(51) Int. Cl.: H04B 10/17

(54) **Régénérateur optique synchrone par modulation d'intensité et modulation de phase par effet Kerr croisé**
Synchroner optischer Regenerator unter Verwendung von Intensitätsmodulation und Phasenmodulation mit gekreutzen Kerreffekt
Synchonous optical regenerator using intensity modulation and phase modulation with cross-Kerr effect

(30) Priorité: 20.03.2000 FR 0003518
(43) Date de publication de la demande: 26.09.2001
(73) Titulaire: Alcatel Lucent, 75008 Paris (FR)
(72) Inventeur: Leclerc, Olivier, 91240 Saint Michel S/Orge (FR); Desurvire, Emmanuel, 91680 Bruyeres le Chatel (FR)
(74) Mandataire: Shamsaei Far, Hassan

(56) Documents cités:
- EP-A- 0 862 286
- WO-A-93/22855

## Description

L'invention concerne les systèmes de transmission par fibre optique, notamment à multiplexage en longueur d'onde, et plus précisément, la régénération dans ces systèmes de transmission.

Il a été proposé, dans les systèmes de transmission à fibre optique à multiplexage en longueur d'onde, d'utiliser régulièrement une modulation synchrone des signaux; une telle modulation est de préférence optique, tout particulièrement pour les systèmes à hauts débits. Divers procédés ont été proposés pour assurer la synchronicité des différents canaux lors de la régénération : allocation de longueurs d'onde assurant une synchronicité à intervalles réguliers sur la liaison, application de retards, modulation à une fréquence multiple de la fréquence des signaux.

La modulation peut être une modulation d'intensité, une modulation de phase, ou une modulation d'intensité et de phase.

F. Devaux et autres, 20 Gbit/s operation of high efficiency InGaAs/InGaAsP MQW electroabsorption modulators with 1.2 V driven voltage, IEEE Photonics Techn. Lett., vol. 5 pages 1288-1290(1993) décrit une modulation d'intensité avec un filtrage étroit, à l'aide d'un modulateur à électro-absorption.

Une autre modulation d'intensité est décrite dans M. Nakazawa et autres, Experimental demonstration of soliton data transmission over unlimited distance with soliton control in time and frequency domains, Electronics Letters, vol. 29 no. 9, pages 729-730; il est proposé dans ce document d'utiliser un modulateur d'intensité du type Mach-Zender à LiNbO₃. O. Leclerc et autres, Polarisation independant InP push-pull Mach-Zender modulator for 20 Gbit/s solitons regeneration, Electronics Letters, vol. 34 no. 10, pages 1011-1013(1998) décrit un modulateur d'intensité du type Mach-Zender à InP.

On connaît par ailleurs la modulation de phase par effet Kerr croisé entre les signaux transmis et une horloge se propageant dans une fibre Kerr.S. Bigo et O. Leclerc, Fundamental limits of all-optical synchronous phase regeneration through Kerr fiber, Proceedings d'ECOC'97, p. 311, Edimburg, 22-25 Sep, est un exemple de mise en oeuvre d'une telle technique ; cet article montre que la modulation de phase par effet Kerr peut être efficace, même en présence de bruit ou de glissement entre les signaux transmis et l'horloge de modulation. O. Leclerc et autres, 2 x 20 Gbit/s, 3500 km regenerated WDM soliton transmission with all-optical Kerr fibre modulation, vol. 34 no. 2, pages 199-201 (1998) démontre la faisabilité d'une modulation de phase par effet Kerr dans des systèmes de transmission à multiplexage en longueur d'onde.

Il est aussi connu de procéder à une modulation de phase et à une modulation d'intensité dans un régénérateur. P. Brindel et autres, "Black-box" optical regenerator for RZ transmission systems, Electronics Letters, vol. 35 no. 6 (1999), pp.480-481 propose une modulation d'intensité puis de phase séparées. B. Dany et autres, Transoceanic 4x40 Gbit/s system combining dispersion-managed soliton transmission and new "black-box" in-line optical regeneration, Electronics Letters, vol. 35 no. 5 (1999), pp. 418-420 applique la même technique de régénération à un système de transmission à quatre canaux utilisant une propagation soliton à gestion de dispersion, avec une séparation des canaux et un régénérateur par canal.

FR-A-2 759 830 et la demande de brevet française déposée le 10 novembre 1999 sous le numéro 9914117, Synchronisation des canaux par fibre dispersive dans un système de transmission à multiplexage en longueurs d'onde, proposent une régénération synchrone par modulation d'intensité, puis par modulation de phase dans des modulateurs distincts.

EP-A-0 843 917 propose d'utiliser un miroir optique non-linéaire en boucle à deux entrées de contrôle pour la modulation de phase de signaux optiques. Il s'agit d'un NOLM à 2 entrées de contrôle ; il est donc l'équivalent fibré d'un modulateur Mach-Zehnder à deux électrodes et permet le contrôle indépendant des modulations (profondeur) d'intensité et de phase.

Ces solutions présentent des inconvénients. La séparation de la modulation de phase et de la modulation d'intensité est une solution complexe et donc coûteuse. La technique du miroir non-linéaire en boucle ne permet pas de contrôler l'accumulation du bruit ou d'ondes dispersives : cette solution de modulation conjointe limite la longueur totale du système de transmission.

L'invention propose une solution qui pallie ces différents inconvénients ; elle propose un régénérateur mettant en oeuvre une modulation d'intensité et une modulation de phase, avec un minimum de composants matériels, et un fonctionnement simple.

Plus précisément, l'invention propose un régénérateur pour un système de transmission optique comprenant un multiplexeur couplant avec les signaux transmis une lumière continue, un modulateur d'intensité modulant les signaux transmis et la lumière continue et une fibre Kerr modulant en phase les signaux transmis par modulation de phase croisée avec la lumière continue modulée en intensité.

Dans un mode de réalisation, le régénérateur présente un filtre après la fibre Kerr filtrant la lumière continue.

Le modulateur d'intensité est avantageusement un modulateur Mach-Zender.

Dans un mode de réalisation, la fibre Kerr présente un indice de non-linéarité supérieur à 2.7.10⁻²⁰ m²/W. Il est aussi avantageux que la dispersion chromatique de la fibre Kerr s'annule pour une longueur d'onde médiane de la longueur d'onde des signaux transmis et de la longueur d'onde de la lumière continue.

De préférence, la profondeur de modulation d'intensité est supérieure à 1 dB, voire supérieure à 3 dB.

L'invention propose aussi un régénérateur pour un système de transmission optique à multiplexage en longueur d'onde comprenant
- un démultiplexeur fournissant en sortie des canaux démultiplexés,
- pour chaque canal démultiplexé, un multiplexeur couplant avec les signaux du canal une lumière continue, un modulateur d'intensité modulant les signaux du canal et la lumière continue et une fibre Kerr modulant en phase les signaux transmis par modulation de phase croisée avec la lumière continue modulée en intensité, et
- un multiplexeur recevant les signaux modulés en phase de chaque canal et fournissant un signal multiplexé.

Dans un mode de réalisation, la lumière continue est fournie par une source unique. On peut dans ce cas prévoir un amplificateur amplifiant les signaux de la source.

Dans un autre mode de réalisation, le modulateur d'intensité est un modulateur Mach-Zender. Il est aussi préférable que la fibre Kerr présente un indice de non-linéarité supérieur à 2.7.10⁻²⁰ m²/W.

Dans un mode de réalisation, la dispersion chromatique de la fibre Kerr d'un canal s'annule pour une longueur d'onde médiane de la longueur d'onde des signaux du canal et de la longueur d'onde de la lumière continue.

De préférence, la profondeur de modulation d'intensité dans un modulateur d'intensité est supérieure à 1 dB, voire supérieure à 3 dB.

L'invention propose encore un système de transmission à fibre optique, comprenant un régénérateur selon l'une des revendications précédentes.

Elle propose enfin un procédé de régénération optique, comprenant :
- le couplage avec les signaux transmis d'une lumière continue;
- une modulation d'intensité conjointe des signaux transmis et de la lumière continue;
- une modulation de phase des signaux transmis par modulation de phase croisée avec la lumière continue modulée en intensité.

De préférence, la modulation d'intensité s'effectue à une profondeur de modulation supérieure à 1dB.

Dans un autre mode de mise en oeuvre du procédé, la modulation de phase s'effectue à une profondeur de modulation de 3 deg.

Il est avantageux de prévoir une étape de filtrage de la lumière continue modulée en intensité, après l'étape de modulation.

D'autres caractéristiques et avantages de l'invention apparaîtront à la lecture de la description qui suit de modes de réalisation de l'invention, donnés à titre d'exemple et en référence aux dessins annexés, qui montrent
- figure 1, une représentation schématique d'un régénérateur selon l'invention, dans un mode de réalisation monocanal ;
- figure 2, une représentation schématique d'un régénérateur selon l'invention, dans un mode de réalisation à multiplexage en longueur d'onde ;
- figure 3, un graphe du facteur de qualité en fonction de la distance, pour un système de transmission utilisant des régénérateurs selon l'invention et selon l'état de la technique.

L'invention propose d'associer une modulation d'intensité et une modulation de phase par effet Kerr croisé entre les signaux et une horloge. Pour générer une horloge optique synchrone avec les signaux transmis, elle propose de moduler en intensité un signal continu, dans le modulateur d'intensité. Cette solution permet de générer simplement et avec précision une horloge optique qui se propage avec les signaux transmis et qui peut être utilisée pour la modulation de phase dans une fibre Kerr.

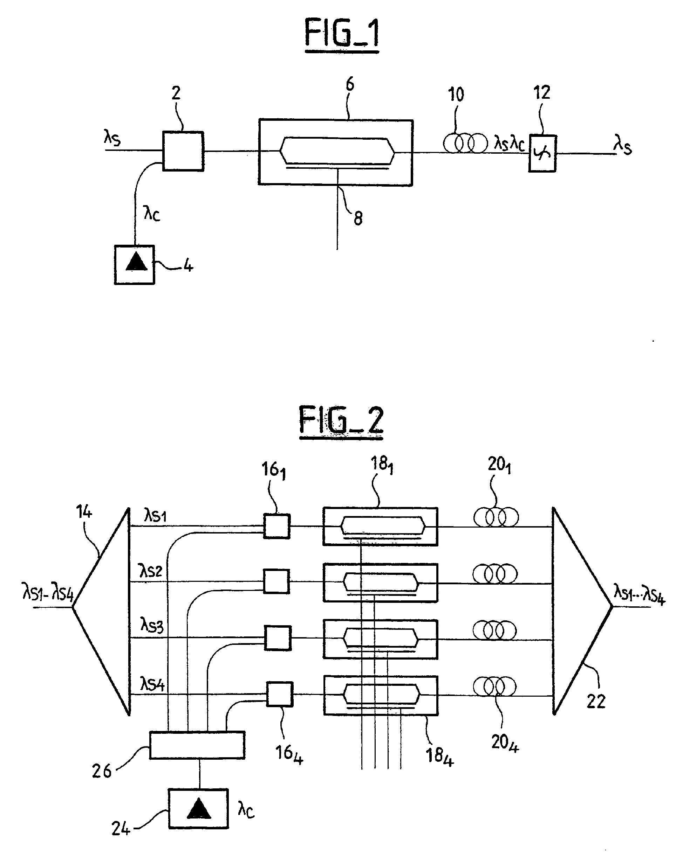

La figure 1 est une représentation schématique d'un régénérateur selon l'invention, dans un mode de réalisation monocanal ; le régénérateur de la figure 1 présente, dans le sens de transmission des signaux à la longueur d'onde λ_{S}, un multiplexeur 2 qui couple, dans la même fibre que les signaux transmis, la lumière d'une source continue 4 à une longueur d'onde λ_{C} différente de la longueur d'onde λ_{S} des signaux transmis. La source peut être une source préamplifiée, le cas échéant à forte puissance ( "boostée" en langue anglaise) pour augmenter l'intensité du signal d'horloge dans le modulateur de phase. Le régénérateur présente ensuite un modulateur d'intensité 6 ; le modulateur d'intensité reçoit en entrée les signaux reçus en entrée du régénérateur, ainsi que la lumière continue couplée par le multiplexeur ; il reçoit par ailleurs sur son entrée de modulation 8 une horloge de modulation, qui dans l'exemple est une horloge radiofréquence. On n'a pas représenté à la figure 1 le dispositif de récupération d'horloge, qui peut être d'un type connu en soi. Dans l'exemple de la figure, le modulateur d'intensité 6 est un modulateur réalisé sur une puce, tel qu'un modulateur Mach-Zender InP. On peut aussi utiliser un modulateur d'un autre type. On obtient en sortie du modulateur d'une part les signaux transmis à la longueur d'onde λ_{S}, qui ont subi une modulation d'intensité, et d'autre part une horloge optique à la longueur d'onde λ_{C}, obtenue par modulation de la lumière continue dans le modulateur d'intensité. Il apparaît clairement que l'horloge ainsi obtenue est parfaitement synchrone avec les signaux transmis ; elle est en effet modulée en intensité en même temps que ces signaux. De ce point de vue, le modulateur d'intensité joue à la fois selon l'invention le rôle de modulation des signaux, mais aussi le rôle de génération d'une horloge parfaitement synchrone. Il suffit pour assurer ces deux fonctions que la longueur d'onde λ_{C} du signal continu soit choisie dans la bande passante du modulateur ; cette contrainte est facile à satisfaire, notamment pour un modulateur d'intensité du type InP, qui permet classiquement une modulation sur une bande de 15 nm. La profondeur de modulation dans le modulateur d'intensité est entre 1 et 20dB typiquement : celle-ci dépend notamment de la largeur du filtre associé et de le "qualité" du signal à régénérer; elle n'impacte pas notablement la qualité de la modulation de phase induite par effet Kerr; il est toutefois préférable qu'elle excède des valeurs de l'ordre de 1 dB, voire de 3dB.

En sortie du modulateur d'intensité, le régénérateur présente une fibre Kerr 10 ; la propagation conjointe dans cette fibre des signaux à la longueur d'onde λ_{S} et de l'horloge à la longueur d'onde λ_{C} induit une modulation de phase des signaux par effet Kerr croisé. La fibre 10 est choisie de sorte à présenter les non-linéarités élevées favorisant l'effet Kerr ; on peut notamment choisir pour la fibre 10 une fibre présentant un indice de non-linéarité n₂ supérieur à 2.710⁻²⁰ m²/W; il peut s'agir typiquement d'une fibre DSF/SMF ou encore d'une fibre chalcogénide. Il est préférable dans le modulateur de phase de limiter les effets du glissement entre les signaux transmis et l'horloge. De ce point de vue, la dispersion chromatique de la fibre est avantageusement choisie de sorte à être nulle pour une longueur d'onde (λ_{S} + λ_{C})/2 médiane de la longueur d'onde des signaux transmis et de la longueur d'onde de l'horloge obtenue par modulation d'intensité. Ce choix de la fibre Kerr permet de limiter le glissement entre l'horloge et les signaux modulés le long de la fibre de modulation 10.

En sortie de la fibre de modulation de phase, on obtient des signaux à la longueur d'onde λ_{S}, qui ont subi une modulation d'intensité, puis une modulation de phase. Le régénérateur présente encore un filtre 12 permettant de filtrer le signal d'horloge à la longueur d'onde λ_{C}. Selon la position spectrale de la longueur d'onde continue par rapport à la longueur d'onde des signaux, le filtre peut être un filtre passe-bande, un filtre passe-haut ou un filtre passe-bas. En sortie du filtre, on n'obtient plus que les signaux transmis, qui ont subi une modulation d'intensité, suivie d'une modulation de phase.

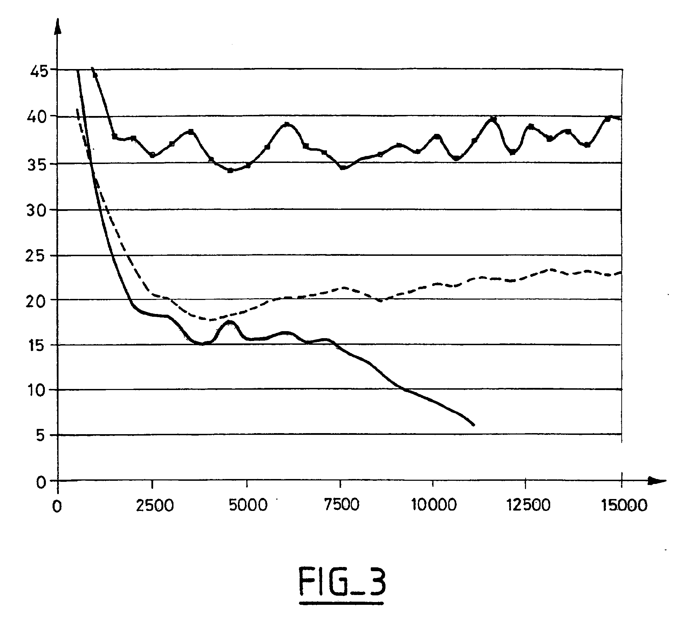

L'invention présente par rapport aux dispositifs de l'état de la technique les avantages suivants. Par rapport à une modulation d'intensité de l'état de la technique, elle permet de procéder à une modulation de phase, sans augmenter de façon significative la complexité du régénérateur. Les seuls composants supplémentaires nécessaires sont une source continue, un multiplexeur, une fibre Kerr et un filtre permettant de filtrer la lumière continue. La séparation entre la modulation d'intensité et la modulation de phase permet de générer lors de la modulation d'intensité l'horloge pour la modulation de phase, comme expliqué plus haut. L'ajout à la modulation d'intensité d'une modulation de phase permet d'améliorer les performances du régénérateur, comme expliqué en référence à la figure 3.

La figure 2 est une représentation schématique d'un régénérateur selon l'invention, dans un mode de réalisation à multiplexage en longueur d'onde ; on considère dans l'exemple de la figure un système de transmission à quatre canaux; le régénérateur comprend un démultiplexeur 14, qui reçoit en entrée les signaux multiplexés, et qui fournit sur quatre sortie les signaux aux longueurs d'onde λ_{S1} à *λ*_{S4} des différents canaux. Pour chaque canal, le régénérateur de la figure 2 présente comme celui de la figure 2 un multiplexeur 16ᵢ pour l'injection d'une source continue, un modulateur d'intensité 18ᵢ et une fibre Kerr 20ᵢ. Les signaux sortant de la fibre Kerr sont appliqués à une entrée d'un multiplexeur 22.

A la différence d'une simple multiplication du dispositif de la figure 1, on utilise dans l'exemple de la figure 2 une source unique 24 pour les signaux à la longueur d'onde continue λ_{C}. La sortie de cette source est amplifiée dans un amplificateur 26 et est appliquée aux différents multiplexeurs 16ᵢ. Par ailleurs, le multiplexeur 22 assure le filtrage de l'horloge de modulation de phase, et il n'est donc pas nécessaire de prévoir dans chaque branche du régénérateur un filtre du type du filtre 12 de la figure 1.

Le modulateur d'intensité et le modulateur de phase peuvent être réalisés comme expliqué en référence à la figure 1; il est notamment possible de choisir la fibre Kerr de chaque canal de sorte à ce qu'elle présente une dispersion chromatique nulle pour une longueur d'onde (λ_{Si} + λ_{C})/2 médiane de la longueur d'onde des signaux du canal en cause et de la longueur d'onde de l'horloge obtenue par modulation d'intensité.

Comme dans le cas de la figure 1, on n'a pas représenté sur la figure 2 le dispositif de génération de l'horloge pour la modulation d'intensité. On peut utiliser une horloge unique si les canaux sont synchrones, ou comme représenté schématiquement à la figure, des horloges distinctes.

Dans les deux modes de réalisation, la puissance de la source continue dépend de la puissance désirée pour l'horloge utilisée dans la modulation de phase. Un décalage en phase de l'ordre de 3° entre l'horloge et le signal transmis à travers la fibre Kerr est approprié : il correspond à une profondeur de modulation de l'ordre de π/50. Dans une fibre en silice, un tel décalage est susceptible d'être obtenu avec une horloge présentant une puissance crête de l'ordre de 2mW ou + 3 dBm. Cette valeur permet de calculer la puissance de la source continue, compte tenu des pertes dans le modulateur d'intensité. Avec une valeur typique pour un modulateur Mach-Zender InP de l'ordre de 13 dB, on obtient une puissance de source à coupler dans la fibre de l'ordre de 16 dBm. Cette puissance peut effectivement être obtenue à l'aide d'une source, le cas échéant préamplifiée et/ou boostée. Il est possible de réduire les pertes à travers le modulateur, notamment en prévoyant des tronçons de fibres coniques en entrée et en sortie du modulateur, pour réduire les pertes d'insertion. On peut ainsi diminuer de 3 à 6 dB la puissance de la pompe continue.

Dans une configuration à quatre canaux, on trouve avec les mêmes hypothèses une puissance de source de l'ordre de + 21 dBm. De nouveau, cette puissance est susceptible d'être obtenue avec une source semi-conductrice, le cas échéant associée à un amplificateur.

L'utilisation pour la modulation de phase d'une fibre chalcogénide présentant des non-linéarités plus importantes permet aussi de diminuer la puissance de l'horloge de modulation de phase, et donc la puissance de la source continue injectée dans le modulateur d'intensité. De nouveau, la diminution est de l'ordre de 3 à 6 dB.

La figure 3 est un graphe du facteur de qualité en fonction de la distance en km, pour un système de transmission utilisant des régénérateurs selon l'invention et selon l'état de la technique. On a porté sur cette figure en traits gras le facteur de qualité obtenu pour une régénération assurée simplement par modulation de phase par effet Kerr; on a porté en traits interrompus le facteur de qualité obtenu pour une régénération assurée simplement par modulation d'intensité. Enfin, apparaît en traits continus avec des carrés le facteur de qualité obtenu à l'aide de régénérateurs selon l'invention. Pour obtenir les résultats de la figure 3, on a considéré des signaux solitons monocanaux. La distance entre amplificateurs dans le système de transmission est de 45 km, et la distance entre régénérateurs est de 90 km, comme dans l'expérience décrite dans l'article précité de S. Bigo et O. Leclerc. La modulation d'intensité est une modulation avec une profondeur de modulation de 3 dB, et le filtre est une filtre de 0,7 nm de bande passante. La puissance de l'horloge est fixée à 3 dBm, ce qui conduit à une modulation de phase de 5°. Pour chaque configuration possible - modulation de phase seule, modulation d'intensité, ou modulation de phase et d'intensité - on a optimisé le système de transmission, en termes de puissance de sortie des amplificateurs.

La figure montre que le facteur de qualité dans le cas de la seule modulation de phase par effet Kerr croisé décroît avec la distance, pour des longueurs supérieures à 7500 km. Dans le cas d'une modulation d'intensité, le facteur Q tend vers une valeur asymptotique de l'ordre de 22 pour des distances de l'ordre de 15000 km. La modulation selon l'invention permet d'atteindre des valeurs asymptotiques largement supérieures, qui sont de l'ordre de 35.

Dans un système de transmission à multiplexage en longueur d'onde à signaux solitons, un avantage supplémentaire de la modulation de phase est de limiter la gigue des signaux, et donc de limiter les effets des collisions entre les solitons des canaux voisins.

Bien entendu, la présente invention n'est pas limitée aux exemples et modes de réalisation décrits et représentés, mais elle est susceptible de nombreuses variantes accessibles à l'homme de l'art. Il est clair que l'on peut utiliser des sources de lumière continue différentes pour les différents canaux du multiplex, notamment dans le cas où le nombre de canaux augmente. Les exemples de la figure 3 sont donnés pour des signaux solitons : l'invention s'applique aussi à d'autres types de signaux RZ ou autres. Dans un système de transmission à multiplexage en longueurs d'onde, des canaux synchrones peuvent être modulés conjointement en phase et en intensité; on peut alors utiliser le régénérateur de la figure 1 si tous les canaux sont synchrones. Alternativement, on peut faire passer dans une branche du régénérateur de la figure 2 plusieurs canaux synchrones.

## Revendications

1. Un régénérateur pour un système de transmission optique comprenant un multiplexeur (2) comptant avec les signaux transmis une lumière continue, **caractérisé en ce qu'**il comprend un modulateur d'intensité (6) agencé pour modulateur, au moyen d'une horloge, les signaux transmis et la lumière continue et une fibre Kerr (10) modulant en phase les signaux transmis par modulation de phase croisée avec la lumière continue modulée en intensité.

2. Le régénérateur de la revendication 1, **caractérisé par** un filtre (12) après la fibre Kerr filtrant la lumière continue.

3. Le régénérateur de la revendication 1 ou 2, **caractérisé en ce que** le modulateur d'intensité est un modulateur Mach-Zender.

4. Le régénérateur de la revendication 1, 2 ou 3, **caractérisé en ce que** la fibre Kerr présente un indice de non-linéarité supérieur à 2.7.10⁻²⁰ m²/W.

5. Le régénérateur de l'une des revendications 1 à 4, **caractérisé en ce que** la dispersion chromatique de la fibre Kerr s'annule pour une longueur d'onde médiane de la longueur d'onde des signaux transmis et de la longueur d'onde de la lumière continue.

6. Le régénérateur de l'une des revendications 1 à 4, **caractérisé en ce que** la profondeur de modulation d'intensité est supérieure à 1 dB, de préférence supérieure à 3 dB.

7. Un régénérateur pour un système de transmission optique à multiplexage en longueur d'onde comprenant
- un démultiplexeur (14) fournissant en sortie des canaux démultiplexés, **caractérisé en ce qu'**il comprend :
- pour choque canal démultiplexé,
- un régénérateur selon la revendication 1 dans lequel un modulateur d'intensité (18ᵢ) est agencé pour moduler les signaux du canal et la lumière continue et une fibre Kerr (20ᵢ) modulant en phase les signaux transmis par modulation de phase croisée avec la lumière continue modulée en intensité, et
- un multiplexeur (22) recevant les signaux modulés en phase de chaque canal et fournissant un signal multiplexé.

8. Le régénérateur de la revendication 7, **caractérisé en ce que** la lumière continue est fournie par une source unique (24).

9. Le régénérateur de la revendication 8, **caractérisé par** un amplificateur (26) amplifiant les signaux de la source.

10. Le régénérateur de la revendication 7, 8 ou 9, **caractérisé en ce que** le modulateur d'intensité est un modulateur Mach-Zender.

11. Le régénérateur de l'une des revendications 7 à 10, **caractérisé en ce que** la fibre Kerr présente un indice de non-linéarité supérieur à 2.7.10²⁰ m²/W.

12. Le régénérateur de l'une des revendications 7 à 11, **caractérisé en ce que** la dispersion chromatique de la fibre Kerr d'un canal s'annule pour une longueur d'onde médiane de la longueur d'onde des signaux du canal et de la longueur d'onde de la lumière continue.

13. Le régénérateur de l'une des revendications 7 à 12, **caractérisé en ce que** la profondeur de modulation d'intensité dans un modulateur d'intensité est supérieure à 1 dB, de préférence supérieure à 3 dB.

14. Un système de transmission à fibre optique, comprenant un régénérateur selon l'une des revendications précédentes.

15. Un procédé de régénération optique, comprenant :
- le couplage avec les signaux transmis d'une lumière continue;
**caractérisé en ce que** il comprend:
- une modulation d'intensité conjointe, au moyen d'une horloge, des signaux transmis et de la lumière continue;
- une modulation de phase des signaux transmis par modulation de phase croisée avec la lumière continue modulée en intensité.

16. Le procédé de la revendication 15, **caractérisé en ce que** la modulation d'intensité s'effectue à une profondeur de modulation supérieure à 1dB.

17. Le procédé de la revendication 16, **caractérisé en ce que** la modulation de phase s'effectue à une profondeur de modulation de 3 deg.

18. Le procédé de la revendication 15, 16 ou 17, **caractérisé par** une étape de filtrage de la lumière continue modulée en intensité, après l'étape de modulation.

## Claims

1. A regenerator for an optical transmission system comprising a multiplexer (2) combining continuous light with the transmitted signals, **characterized in that** it comprises an intensity modulator (6) adapted to modulate, by means of a clock, the transmitted signals and continuous light, and a Kerr fiber (10) adapted for phase-modulating the transmitted signals using cross-phase modulation with the intensity-modulated continuous light.

2. The regenerator of claim 1, **characterized by** a filter (12) placed after the Kerr fiber, adapted for filtering the continuous light.

3. The regenerator of claim 1 or 2, **characterized in that** the intensity modulator is a Mach-Zehnder modulator.

4. The regenerator of claim 1, 2 or 3, **characterized in that** the Kerr fiber has a non-linearity index greater than 2.7.10⁻²⁰ m²/W.

5. The regenerator of one of claims 1 to 4, **characterized in that** the chromatic dispersion of the Kerr fiber is cancelled at a median wavelength of the transmitted signals' wavelength and the continuous light's wavelength.

6. The regenerator of one of claims 1 to 4, **characterized in that** the intensity modulation depth is greater than 1 dB, and preferentially greater than 3 dB.

7. A regenerator for a wavelength-division multiplexing optical transmission system comprising:
- a demultiplexer (14) which, at its output, provides demultiplexed channels, **characterized in that** it comprises:
- for each demultiplexed channel,
- a regenerator according to claim 1, wherein an intensity modulator (18) is adapted for modulating the channel's signals and continuous light, and a Kerr fiber (20) adapted for phase-modulating the transmitted signals using cross-phase modulation with the intensity-modulated light, and
- a multiplexer (22) adapted for receiving each channel's phase-modulated signals and for providing a multiplexed signal.

8. The regenerator of claim 7, **characterized in that** the continuous light is provided by a single source (24).

9. The regenerator of claim 8, **characterized by** an amplifier (26) adapted for amplifying the source's signals.

10. The regenerator of claim 7, 8 or 9, **characterized in that** the intensity modulator is a Mach-Zehnder modulator.

11. The regenerator of one of claims 7 to 10, **characterized in that** the Kerr fiber has a non-linearity index greater than 2.7.10⁻²m²/W.

12. The regenerator of one of claims 7 to 11, **characterized in that** the chromatic dispersion of the Kerr fiber cancels itself out at a median wavelength of the transmitted signals' wavelength and the continuous light's wavelength.

13. The regenerator of one of claims 7 to 12, **characterized in that** the intensity modulation depth in an intensity modulator is greater than 1 dB, and preferentially greater than 3 dB.

14. An optical fiber transmission system, comprising a regenerator according to one of the preceding claims.

15. An optical regeneration method, comprising:
- combining a continuous light with the transmitted signals;
**characterized in that** it comprises:
- the combined intensity modulation of the transmitted signals and the continuous light, using a clock;
- The phase modulation of the transmitted signals, using cross-phase modulation with the intensity-modulated continuous light.

16. The method of claim 15, characterizing that the intensity modulation is carried out at a modulation depth greater than 1 dB.

17. The method of claim 16, **characterized in that** the phase modulation is carried out at a modulation depth of 3 dB.

18. The method of claim 15, 16 or 17, **characterized by** a step of filtering the intensity-modulated continuous light, after the modulation step.

## Patentansprüche

1. Ein Regenerator für ein optisches Übertragungssystem mit einem Multiplexer (2), welcher mit den übertragenen Signalen ein Dauerlicht koppelt, **dadurch gekennzeichnet, dass** er einen Intensitätsmodulator (6) umfasst, welcher dazu ausgelegt ist, mit Hilfe eines Taktgebers die übertragenen Signale und das Dauerlicht zu modulieren, sowie eine Faser mit Kerr-Effekt (10), welche dazu ausgelegt ist, die Phasenmodulierung der übertragenen Signale durch Kreuzphasenmodulation mit dem intensitätsmodulierten Dauerlicht durchzuführen.

2. Der Regenerator nach Anspruch 1, **gekennzeichnet durch** einen der Faser mit Kerr-Effekt nachgeschalteten Filter (12), welcher dazu ausgelegt ist, das Dauerlicht zu filtern.

3. Der Regenerator nach Anspruch 1 oder 2, **dadurch gekennzeichnet, dass** der Intensitätsmodulator ein Mach-Zehnder-Modulator ist.

4. Der Regenerator nach Anspruch 1, 2 oder 3, **dadurch gekennzeichnet, dass** der Nichtlinearitätsindex der Faser mit Kerr-Effekt größer als 2.7.10-²⁰ m²/W ist.

5. Der Regenerator nach einem der Ansprüche 1 bis 4, **dadurch gekennzeichnet, dass** sich die chromatische Dispersion der Faser mit Kerr-Effekt bei einer Wellenlänge, welche dem Durchschnitt der Wellenlänge der übertragenen Signale und der Wellenlänger des Dauerlichts entspricht, aufhebt.

6. Der Regenerator nach einem der Ansprüche 1 bis 4, **dadurch gekennzeichnet, dass** die Intensitätsmodulationstiefe größer als 1 dB, vorzugsweise größer als 3 dB ist.

7. Ein Regenerator für ein optisches Übertragungssystem mit Wellenlängenmultiplex, umfassend:
- Einen Demultiplexer (14), welcher am Ausgang gedemultiplexte Kanäle liefert, **dadurch gekennzeichnet, dass** er umfasst:
Für jeden gedemultiplexten Kanal,
- einen Regenerator nach Anspruch 1, in welchem ein Intensitätsmodulator (18) dazu ausgelegt ist, die Signale des Kanals und das Dauerlicht zu modulieren, sowie eine Faser mit Kerr-Effekt (20), welche dazu ausgelegt ist, die Phasenmodulierung der übertragenen Signale durch Kreuzphasenmodulation mit dem intensitätsmodulierten Dauerlicht durchzuführen, und
- einen Multiplexer (22), dazu ausgelegt, die phasenmodulierten Signale eines jeden Kanals zu empfangen, und dazu ausgelegt, ein gemultiplextes Signal bereitzustellen.

8. Der Regenerator nach Anspruch 7, **dadurch gekennzeichnet, dass** das Dauerlicht von einer einzigen Quelle (24) geliefert wird.

9. Der Regenerator nach Anspruch 8, **gekennzeichnet durch** einen Verstärker (26), welcher dazu ausgelegt ist, die Signale der Quelle zu verstärken.

10. Der Regenerator nach Anspruch 7, 8 oder 9, **dadurch gekennzeichnet, dass** der Intensitätsmodulator ein Mach-Zehnder-Modulator ist.

11. Der Regenerator nach einem der Ansprüche 7 bis 10, **dadurch gekennzeichnet, dass** der Nichtlinearitätsindex der Faser mit Kerr-Effekt größer als 2.7.10⁻²⁰ m²/W ist.

12. Der Regenerator nach einem der Ansprüche 7 bis 11, **dadurch gekennzeichnet, dass** sich die chromatische Dispersion der Faser mit Kerr-Effekt eines Kanals bei einer Wellenlänge, welche dem Durchschnitt der Wellenlänge der übertragenen Signale und der Wellenlänger des Dauerlichts entspricht, aufhebt.

13. Der Regenerator nach einem der Ansprüche 7 bis 12, **dadurch gekennzeichnet, dass** die Intensitätsmodulationstiefe in einem Intensitätsmodulator größer als 1 dB, vorzugsweise größer als 3 dB ist.

14. Ein faseroptisches Übertragungssystem mit einem Regenerator gemäß einem der vorstehenden Ansprüche.

15. Ein optisches Regenerationsverfahren, umfassend:
- Die Kopplung mit den übertragenen Signalen eines Dauerlichts;
**dadurch gekennzeichnet, dass** es umfasst:
- Eine gemeinsame Intensitätsmodulation, mit Hilfe eines Taktgebers, der übertragenen Signale und des Dauerlichts;
- eine Phasenmodulation der übertragenen Signale durch Kreuzphasenmodulation mit dem intensitätsmodulierten Dauerlicht.

16. Das Verfahren nach Anspruch 15, **dadurch gekennzeichnet, dass** die Intensitätsmodulation bei einer Modulationstiefe erfolgt, welche 1 dB überschreitet.

17. Das Verfahren nach Anspruch 16, **dadurch gekennzeichnet, dass** die Phasenmodulation bei einer Modulationstiefe von 3 Grad erfolgt.

18. Das Verfahren nach Anspruch 15, 16 oder 17, **gekennzeichnet durch** einen Schritt des Filterns des intensitätsmodulierten Dauerlichts im Anschluss an den Schritt der Modulation.
